# EUROPÄISCHE PATENTANMELDUNG

(11) **EP 0 589 372 A2**
(43) Veröffentlichungstag der Anmeldung: **30.03.1994**
(21) Anmeldenummer: 93115043.7
(22) Anmeldetag: 18.09.1993
(51) Int. Cl.: B07C 5/344

(54) **Verfahren zur Ermittlung von Flüssigkeiten in faserigen und/oder porigen Materialien**

(30) Priorität: 21.09.1992 DE 4231526
(71) Anmelder: BFI ENTSORGUNGSTECHNOLOGIE GmbH, D-40883 Ratingen (DE)
(72) Erfinder: Kaiser, Dieter, D-44357 Dortmund (DE); Wintrich, Franz, D-45309 Essen (DE)

(57) **Zusammenfassung**

Die vorliegende Erfindung betrifft ein Verfahren zur Ermittlung von Flüssigkeiten in faserigen und/oder porigen Materialien durch Bestrahlen der Materialien mit einer Mikrowellenquelle, Erfassung der Wärmeausstrahlung durch Temperaturmeßgeräte und Weiterleitung der Temperaturmeßdaten zu einer Sortiereinrichtung bzw. Steuerung einer Sortiereinrichtung durch die Temperaturmeßdaten, wobei nach Härtung und Trocknung der Polymeren in durch vorzugsweise mit wässrigen Polymerlösungen behandelten Materialien in diesen Materialien verbleibende Restfeuchte erfaßt wird und eine Aussortierung dieser Materialien aus keine Restfeuchte enthaltenden Materialien erfolgt.

## Beschreibung

Die vorliegende Erfindung betrifft ein Verfahren zur Ermittlung von Flüssigkeiten in faserigen und/oder porigen Materialien durch Bestrahlung der Materialien durch eine Mikrowellenquelle, Erfassung der Wärmeausstrahlung durch Temperaturmeßgeräte und Weiterleitung der Temperaturmeßdaten zu einer Sortiereinrichtung bzw. Steuerung einer Sortiereinrichtung durch die Temperaturmeßdaten, wobei durch die unterschiedliche Erwärmung der Flüssigkeiten enthaltenden Bereiche der Materialien eine Sortierung von Flüssigkeit enthaltenden und keine Flüssigkeit enthaltenden Materialien erfolgt.

Es ist bekannt, daß sich unterschiedliche Materialien aufgrund unterschiedlicher Energieabsorption und unterschiedlicher Wärmeleitung bei Bestrahlung mit Mikrowellen unterschiedlich erwärmen.
Diesen Effekt hat man sich unter anderem bei der Sortierung von Materialien, insbesondere auch von Abfallmaterialien zunutze gemacht, indem man durch Temperaturmeßgeräte die unterschiedliche Wärmeausstrahlung gemessen und die so erhaltenen Daten als Signale zur Steuerung einer Sortieranlage verwendet hat. So wird in der P 40 18 757 ein Verfahren zum Erkennen elektrisch nichtleitender Bestandteile in einem Gemenge aus leitenden und nichtleitenden Materialien beschrieben. Das Verfahren macht es möglich, organische Abfälle, wie z. B. kompostierbare Materialien von anorganischen, wie z. B. Glas und Metallen zu trennen.
In der Anmeldung wird auch darauf hingewiesen, daß der Erwärmungs- bzw. Trenneffekt dadurch verstärkt werden kann, daß man das kompostierbare Material befeuchtet, da hierdurch die Erwärmung und damit die Trennbarkeit erhöht werden.
In der P 40 21 882 wird ein Verfahren zum Erkennen unterschiedlicher Kunststoffe beschrieben, indem man ebenfalls ein Gemenge unterschiedlicher Kunststoffe, wie es beispielsweise in Abfällen vorliegt, mit Mikrowellen bestrahlt und auch hier die unterschiedliche Wärmeabstrahlung zur Betätigung einer Sortiereinrichtung nutzt. Zur Erfassung der Wärmeabstrahlung wird vorzugsweise ein Pyrometer genutzt.
Obgleich die beschriebenen Verfahren bekannt sind, ist es dem Fachmann in wichtigen technischen Bereichen bisher nicht gelungen, bestimmte Trennvorgänge durchzuführen. Ein solcher Bereich ist das Aussortieren Restfeuchte enthaltender Materialien, die aus Steinwolle, Glaswolle, textilartigen Materialien, die aus Steinwolle, Glaswolle, textilartigen Materialien unterschiedlicher chemischer Zusammensetzung u. a. hergestellt werden und deren Bestandteile durch Anwendung einer wässrigen Polymerlösung und Aushärtung bzw. Auspolymerisation derselben miteinander verklebt werden. Hierbei verbleiben trotz Aushärtung bzw. Auspolymerisation und anschließender Trocknung Teilmengen der Materialien im Gesamtmaterial, die noch Restfeuchte enthalten. Werden solche Materialien bestimmten Verwendungen zugeführt, wie z. B. der Verwendung als Putzträgerplatten, so wirkt sich die verbleibende Restfeuchte sehr ungünstig aus. Aufgabenstellung war daher, solche Teilmengen zu erkennen und sie einer wirtschaftlichen Nachbehandlung durch Trocknung zuzuführen.
Ein Verfahren zur zuverlässigen Erfassung solcher Teilmengen und zur wirtschaftlichen Nachbehandlung stand bisher nicht zur Verfügung. Es bestand daher für den Hersteller und Anwender ein erhebliches Risiko bei der Verwendung der Materialien.

Der Anmelderin ist es nunmehr gelungen, ein solches sehr zuverlässiges und wirtschaftliches Verfahren zur Ermittlung von Flüssigkeiten in faserigen und/oder porigen Materialien zu entwickeln durch Bestrahlen der Materialien mit einer Mikrowellenquelle, Erfassung der Wärmeausstrahlung aus den bestrahlten Materialien durch Temperaturmeßgeräte und Weiterleitung der Temperaturmeßdaten zu einer Sortiereinrichtung bzw. Steuerung einer Sortiereinrichtung durch die Temperaturmeßdaten, dadurch gekennzeichnet, daß die Materialien mit Polymerlösungen behandelt werden und daß nach Härtung der Polymeren in durch mit wässrigen Polymerlösungen behandelten Materialien und Trocknung derselben in diesen Materialien verbleibende Restfeuchte erfaßt wird und eine Aussortierung dieser Materialien aus keine Restfeuchte enthaltenden Materialien erfolgt.

Die Art der Materialien kann, wie oben bereits beschrieben, unterschiedlicher Art sein. So kann es sich um Steinwolle, Keramikfasern unterschiedlichster Art, textilartige Materialien unterschiedlichster Art, die dem Fachmann bekannt sind, so daß sie hier nicht weiter zu erläutern sind, handeln. Auch Gemische der genannten Materialien kommen erfindungsgemäß in Frage.
Die Form der Materialien kann sehr unterschiedlich sein, so kann es sich um vliesartige, mattenartige, tuchartige aber auch sonstig geformte Materialien handeln, wie z. B. Knäuel, Blöcke, Kugeln, Mischformen und dergl. handeln. Nachdem in üblicher Weise eine Herstellung von Einzelfasern bzw. -fäden erfolgt ist, wie z. B. durch Spinnen, Verpressen durch Düsen, Extrudieren u. a., werden diese zu bestimmten gewünschten, oben genannten Formen verarbeitet, beispielsweise durch Verknäueln, Verpressen u. dergl., schließlich erfolgt ein Verkleben bzw. Verbinden der Fasern bzw. Formbestandteile miteinander durch Besprühen mit einer härtbaren vorzugsweise wässrigen bzw. überwiegend wässrigen Polymerlösung und Aushärtung bzw. Auspolymerisation. Geeignete Polymere sind z. B. nicht ausgehärtete Polymere bestehend aus Formaldehyd und Komponenten wie Phenol und Phenolderivaten, Melamin und Melaminderivaten, Harnstoff und Harnstoffderivaten. Polyacrylaten und Derviaten, wie z. B. Methacrylaten u.a., die dem Fachmann bekannt sind und deren Aushärtung auf unterschiedliche Weise, wie durch einfaches Erhitzen aber auch durch Zugabe von Radikalbildnern u. a. Methoden erfolgen kann.
Mach einer Trocknungsstufe sind die Materialien im allgemeinen zu Anwendungen durch den Endverbraucher geeignet.
Wichtige Anwendungen bestehen u.a. im Baugewerbe, wie z. B. als Dämmstoffe, Putzträgerplatten, Platten auf denen Tapeten aufgebracht werden u.a.
Von großer Bedeutung ist, daß die verwendeten Materialien frei von Restfeuchtigkeit sind, da letztere zu schwerwiegenden Schäden wie Ablösung oder Verfärbung des Putzes, der Tapeten oder anderer aufgebrachter Stoffe führen kann. Für den Hersteller der Materialien ebenso wie für den Anwender ist daher von großer Bedeutung, verbleibende Restfeuchte zu erkennen und auszusortieren. Dies muß zuverlässig und wirtschaftlich erfolgen.
Nach dem Stand der Technik fehlte bisher die Möglichkeit, in dieser Weise Schäden auszuschließen.
Hier hat nunmehr die Anmelderin einen entscheidenden Fortschritt erzielt durch Entwicklung eines besonders vorteilhaften oben beschriebenen Verfahrens. Durch die an sich bekannte Bestrahlung mit Mikrowellen, unterschiedliche Wärmeaufnahme von Bereichen mit und ohne Restfeuchte, Aufnahme der von den bestrahlten Materialien abgegebenen Wärmestrahlung durch ein Temperaturmeßgerät, wie z. B. ein Thermoelement bzw. mehrere Thermoelemente, ein Pyrometer und andere dem Fachmann bekannte wärmeempfindliche Geräte und Weiterleitung der Temperaturmeßdaten an einen mit Daten gespeicherten Computer lassen sich erfindungsgemäß die Restfeuchte enthaltenden Materialien eindeutig identifizieren. Weitergabe der Meßdaten nach Auswertung durch den Computer erlaubt es zuverlässig, eine Sortiervorrichtung in der Weise zu betreiben, daß die Restfeuchte enthaltenden Materialien aussortiert werden können. Die Sortierung bzw. Erkennung der Restfeuchte enthaltenden Materialien kann auch dazu genutzt werden, eine Schneidemaschine in Betrieb zu setzen, die die Restfeuchte enthaltenden Bereiche abschneidet und aussortiert.
Die aussortierten Materialien können anschließend einer Trocknungsvorrichtung zugeführt werden.
Das erfindungsgemäße Verfahren erlaubt jedoch über die Erkennung und Aussortierung der Restfeuchte enthaltenden Materialien hinaus, die Menge an vorhandener Restfeuchte dadurch zu bestimmen, daß die Größe der feuchten Bereiche auf die Weise ermittelt wird, daß zumindest aus zwei Richtungen, vorzugsweise von oberhalb und unterhalb des Materials eine Wärmemessung erfolgt. Mit Hilfe gespeicherter Vergleichsdaten erlaubt diese Meßmethode die Feuchtigkeitsmenge, im wesentlichen, bzw. bevorzugt Wasser, exakt zu bestimmen. Die Messungen können erfindungsgemäß auch aus mehr als zwei Richtungen vorgenommen werden. Im allgemeinen genügen jedoch Messungen aus zwei Perspektiven.
Die zuverlässige Erfassung der Wassermenge erlaubt es nunmehr, die Trocknung der Restfeuchte enthaltenden Materialien gezielt vorzunehmen, so daß zur Trocknung nur die Energie aufgebracht werden muß, die tatsächlich zur Entfernung des vorhandenen Wassers erforderlich ist.
Die Erfindung betrifft auch die Verwendung der Verfahrensmerkmale gemäß Ansprüchen 1 bis 14 zur Ermittlung von Materialien, die Restfeuchte enthalten, deren Aussortierung bzw. Abtrennung von den Materialien, die keine Restfeuchte enthalten und die gezielte Trocknung der die Restfeuchte enthaltenden Materialien.
Obgleich grundsätzlich auch Feuchtigkeit erfindungsgemäß erfaßt werden kann, die nicht aus Wasser bzw. nicht nur aus Wasser besteht, so ist die Erfassung von Wasserfeuchte von besonderer Bedeutung, da im allgemeinen wässrige Polymerlösungen zur beschriebenen Verklebung eingesetzt werden. Andere Lösungsmittel können dann eine gewisse Rolle spielen, wenn sie durch Mikrowellen gegenüber den nicht feuchten Stellen zu einer erkennbar unterschiedlichen Erwärmung führen. Bevorzugt sind dann solche Lösungsmittel, die keine explosiven Gemische mit Luft bilden.

## Patentansprüche

1. Verfahren zur Ermittlung von Flüssigkeiten in faserigen und/oder porigen Materialien durch Bestrahlen der Materialien durch eine Mikrowellenquelle, Erfassung der Wärmeausstrahlung durch Temperaturmeßgeräte und Weiterleitung der Temperaturmeßdaten zu einer Sortiereinrichtung bzw. Steuerung einer Sortiereinrichtung durch die Temperaturmeßdaten, dadurch gekennzeichnet, daß die Materialien mit Polymerlösungen behandelt werden und daß nach Härtung der Polymeren in durch mit vorzugsweise wässrigen Polymerlösungen behandelten Materialien und Trocknung derselben in diesen Materialien verbleibende Restfeuchte erfaßt wird und eine Aussortierung dieser Materialien aus keine Restfeuchte enthaltenden Materialien erfolgt.

2. Verfahren nach Anspruch 1, dadurch gekennzeichnet, daß die Materialien Steinwollematerialien sind.

3. Verfahren nach Anspruch 1, dadurch gekennzeichnet, daß die Materialien Glaswollematerialien sind.

4. Verfahren nach Anspruch 1, dadurch gekennzeichnet, daß die Materialien textilartige Materialien unterschiedlicher chemischer Zusammensetzung sind.

5. Verfahren nach den Ansprüchen 1 bis 4, dadurch gekennzeichnet, daß die Materialien vliesartig sind.

6. Verfahren nach den Ansprüchen 1 bis 4, dadurch gekennzeichnet, daß die Materialien mattenartig sind.

7. Verfahren nach den Ansprüchen 1 bis 4, dadurch gekennzeichnet, daß die Materialien tuchartig sind.

8. Verfahren nach den Ansprüchen 1 bis 7, dadurch gekennzeichnet, daß die Temperaturmessung aus mindestens einer, bevorzugt zwei Richtungen, erfolgt.

9. Verfahren nach den Ansprüchen 1 bis 8, dadurch gekennzeichnet, daß die Temperaturmessung von oberhalb und unterhalb des Materials erfolgt.

10. Verfahren nach den Ansprüchen 1 bis 9, dadurch gekennzeichnet, daß die nicht auskondensierte wässrige Polymerlösung Formaldehyd enthält.

11. Verfahren nach den Ansprüchen 1 bis 9, dadurch gekennzeichnet, daß die nicht auspolymerisierte wässrige Polymerlösung Polyacrylate bzw. Polyacrylatderivate enthält.

12. Verfahren nach den Ansprüchen 1 - 11, dadurch gekennzeichnet, daß aufgrund der unterschiedlichen Wärmeausstrahlung eine Steuerung einer Sortieranlage in der Weise erfolgt, daß die Restfeuchte enthaltenden Materialien einer Trocknungsvorrichtung zugeführt werden.

13. Verfahren nach den Ansprüchen 1 bis 12, dadurch gekennzeichnet, daß aufgrund der Temperaturmessung aus wenigstens zwei Richtungen eine Berechnung der tatsächlichen verbleibenden Restfeuchte bzw. Restfeuchteflächengröße erfolgt.

14. Verfahren nach den Ansprüchen 1 bis 13, dadurch gekennzeichnet, daß die Trocknungsvorrichtung durch die ermittelte Restfeuchte gesteuert wird.

15. Verwendung der Verfahrensmerkmale nach Anspruch 1 und ggf. den Ansprüchen 2 bis 14, dadurch gekennzeichnet, daß sie zur Entfernung von Restfeuchte enthaltenden Materialien aus keine solche Restfeuchte enthaltenden Materialien dient.

16. Verwendung der Verfahrensmerkmale nach Anspruch 1 und ggf. den Ansprüchen 2 bis 14, dadurch gekennzeichnet, daß sie dazu dient, die abgetrennten Restfeuchte enthaltenden Materialien gezielt zu trocknen.
